# EUROPEAN PATENT SPECIFICATION

(11) **EP 3 241 631 B1**
(45) Date of publication and mention of the grant of the patent: **17.02.2021**
(21) Application number: 16172313.5
(22) Date of filing: 31.05.2016
(51) Int. Cl.: B22C 9/10, F01P 3/10, F02F 3/22

(54) **PISTON FOR INTERNAL COMBUSTION ENGINE, AND COOLING CHANNEL CORE**
KOLBEN FÜR VERBRENNUNGSMOTOR UND KÜHLKANALKERN
PISTON POUR MOTEUR À COMBUSTION INTERNE ET NOYAU DE CANAL DE REFROIDISSEMENT

(30) Priority: 02.05.2016 KR 20160054197
(43) Date of publication of application: 08.11.2017
(73) Proprietor: Dong Yang Piston Co., Ltd., Gyeonggi-do 15420 (KR)
(72) Inventor: YOO, In Cheol, Gwonseon-gu, Suwon-si Gyeonggi-do 16610 (KR); Shim, Woo Seok, Gyeonggi-do 15823 (KR); Jun, Sang Hyuk, Suji-gu, Yongin-si Gyeonggi-do 16818 (KR); Lee, Jeong Keon, Incheon 21680 (KR); Ryu, Kwan Ho, Ansan-si, Gyeonggi-do 15623 (KR); Yang, Jun Kui, Gangnam-gu Seoul 06293 (KR)
(74) Representative: Mounteney, Simon James

(56) References cited:
- EP-A1- 0 855 499
- DE-A1-102004 060 546
- DE-A1-102008 002 571
- JP-A- 2009 215 978
- JP-A- 2012 237 229
- JP-U- H02 118 151

## Description

### BACKGROUND

### 1. Field

The present invention relates to a piston for an internal combustion engine, and a cooling channel core and, more particularly, to a piston reciprocating in a cylinder of an internal combustion engine and receiving the pressure of high-temperature and high-pressure explosion in a combustion process to provide motive power to a crankshaft through a connecting rod, and a cooling channel core.

### 2. Description of the Related Art

In general, a diesel engine, which is a high-temperature and high-pressure compression ignition engine, has a very high combustion temperature and thus the temperature of a piston thereof is much higher than that of a gasoline engine. As such, a piston ring is burnt, thermal fatigue stress of the piston is increased, and thus the engine is damaged.

To prevent the above problem, a piston of a diesel engine or a gasoline engine includes a cooling channel to cool the piston. The cooling channel is provided at the center of the piston in a ring shape using a coring method, and an oil inlet and an oil outlet are provided at two sides thereof. That is, oil scattered due to pumping of an oil pump during vertical reciprocation of the piston is supplied through the oil inlet, circulates through the cooling channel to cool the piston, and then is discharged through the oil outlet.

In a conventional piston for an internal combustion engine, a cooling channel is generated using a coring method in a piston casting process, and a ceramic core formed of a ceramic material or a salt core formed of compressed salt is used for coring. That is, a ring is generated using a ceramic material or compressed salt and two pillars are provided to support the ring. One of two holes generated due to the pillars serves as the oil inlet and the other thereof serves as the oil outlet after the casting process.

However, when the conventional piston moves upward at high speed in a direction from a location close to an engine oil spray to a location far from the same, the engine oil flows backward in the cooling channel and thus is discharged not only through a refrigerant outlet but also through a refrigerant inlet. As such, cooling efficiency of the piston is lowered.

EP 08 55 499 A1 describes a liquid-cooled piston comprising: coolant channels; apertures in the coolant channels; and a virtually radially running connecting channel, inclined in some areas, and connected to the ring segment-shaped channels in the area of the apertures, wherein the cross-sections of the coolant channels are so formed that they become greater remote from the apertures.

### SUMMARY

The present invention provides a piston for an internal combustion engine, and a cooling channel core, the piston and the cooling channel core capable of inducing engine oil to flow from an refrigerant inlet to a refrigerant outlet in a cooling channel of the piston. However, the scope of the present invention is not limited thereto.

According to an aspect of the present invention, there is provided a piston for an internal combustion engine as set-out in Claim 1. Optional features of this aspect of the invention are set out in Claims 2 and 3.

According to another aspect of the present invention, there is provided a cooling channel core as set-out in Claim 4. Optional features of this aspect of the invention are set-out in Claims 5 to 7.

### BRIEF DESCRIPTION OF THE DRAWINGS

The above and other features and advantages of the present invention will become more apparent by describing in detail embodiments thereof with reference to the attached drawings in which:
FIG. 1 is a perspective view of a piston for an internal combustion engine, according to an embodiment of the present invention;
FIG. 2 is a cross-sectional view taken along line II-II of the piston of FIG. 1;
FIG. 3 is a perspective view showing a reference example useful for understanding the present invention of a cooling channel or a cooling channel core of the piston of FIG. 1;
FIG. 4 is a plan view of FIG. 3;
FIG. 5 is a side view of FIG. 3;
FIG. 6 is a bottom perspective view of FIG. 3;
FIG. 7 is a cross-sectional view showing that the cooling channel core of FIG. 3 is inserted into a casting mold;
FIG. 8 is a perspective view showing a reference example useful for understanding the present invention of a cooling channel or a cooling channel core of a piston for an internal combustion engine;
FIG. 9 is a plan view of FIG. 8;
FIG. 10 is a side view of FIG. 8;
FIG. 11 is a bottom perspective view of FIG. 8;
FIG. 12 is a perspective view showing an example of a cooling channel or a cooling channel core of a piston for an internal combustion engine, according to another embodiment of the present invention;
FIG. 13 is a plan view of FIG. 12;
FIG. 14 is a side view of FIG. 12; and
FIG. 15 is a bottom perspective view of FIG. 12.

### DETAILED DESCRIPTION

Hereinafter, the present invention will be described in detail by explaining embodiments of the invention with reference to the attached drawings.

The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art. In the drawings, the thicknesses or sizes of layers are exaggerated for clarity.

As mentioned herein, a piston for an internal combustion engine may linearly reciprocate in a cylinder, provide motive power generated due to a high-temperature and high-pressure gas, to a crankshaft through a connecting rod to generate a rotational force in a combustion process, and operate by receiving power from the crankshaft in suction, compression, and exhaust processes.

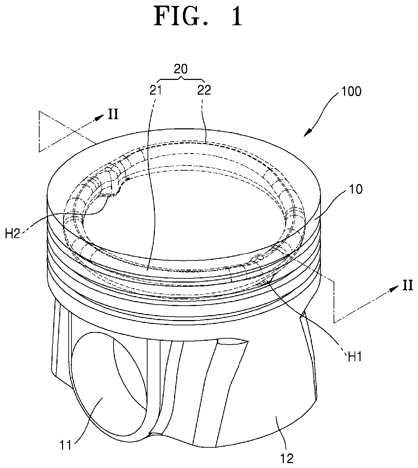

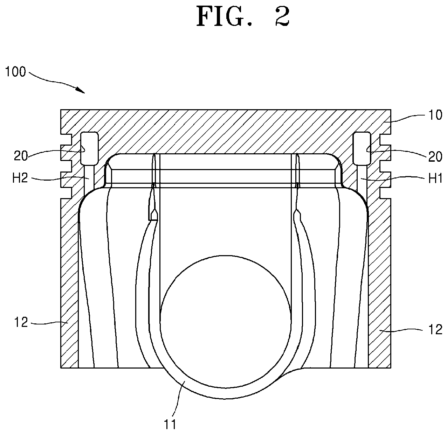

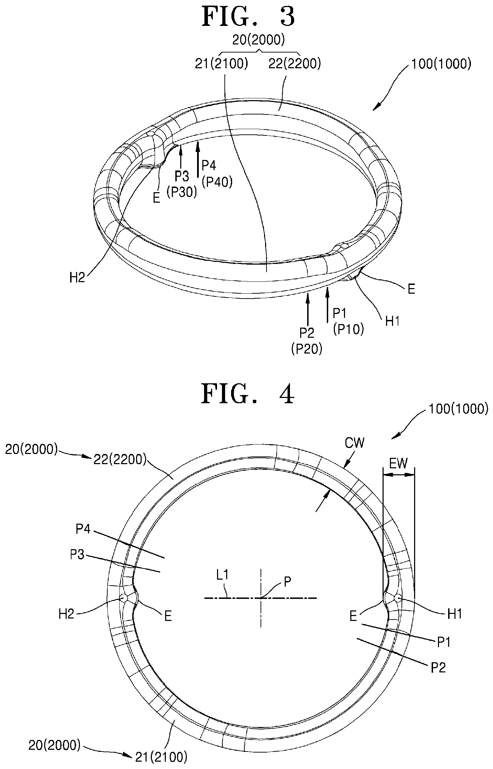

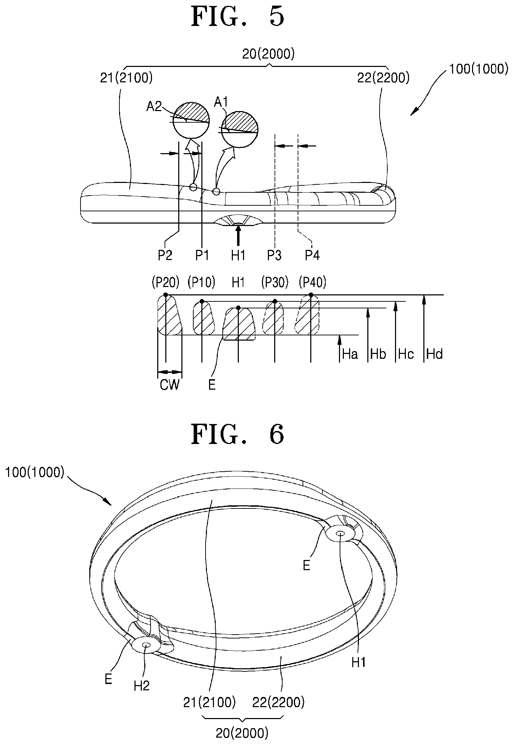

FIG. 1 is a perspective view of a piston 100 for an internal combustion engine, according to an embodiment of the present invention, FIG. 2 is a cross-sectional view taken along line II-II of the piston 100 of FIG. 1, FIG. 3 is a perspective view showing a reference example useful for understanding the present invention of a cooling channel 20 or a cooling channel core 1000 of the piston 100 of FIG. 1, FIG. 4 is a plan view of FIG. 3, FIG. 5 is a side view of FIG. 3, and FIG. 6 is a bottom perspective view of FIG. 3.

As illustrated in FIGS. 1 and 2, the piston 100 according to an embodiment of the present invention may include a body 10 and the cooling channel 20.

For example, the body 10 may include a piston pin boss 11 for inserting a piston pin (not shown) thereinto, and a skirt 12 corresponding to a cylinder wall. Specifically, for example, the piston pin is a pin for connecting the piston pin boss 11 to a small end of a connecting rod (not shown), and may provide great power received by the piston 100, to a crankshaft through the connecting rod and, at the same time, reciprocate together with the piston 100 at high speed in a cylinder.

As illustrated in FIGS. 1 and 2, the body 10 may be applied to both a gasoline engine and a diesel engine, may generally include a cast iron component or an aluminum component, and may be a cylindrical structure having a closed end and an open end and having a sufficient strength and durability against high temperature and high pressure of an internal combustion engine. However, the body 10 is not limited to the above-described material, type, and shape and may be variously changed.

As illustrated in FIGS. 3 to 6, for a reference example, the cooling channel 20 may be a refrigerant channel extending from a refrigerant inlet H1 provided at a side of the body 10 to a refrigerant outlet H2 provided at another side of the body 10 such that a refrigerant, e.g., cooling oil, for cooling the body 10 may flow therethrough.

More specifically, for example, the cooling channel 20 may be a ring-shaped channel including a first channel 21 and a second channel 22.

Here, the first channel 21 may be provided from the refrigerant inlet H1 to the refrigerant outlet H2 along a first outer circumferential direction of the body 10 in such a manner that a portion of the refrigerant supplied through the refrigerant inlet H1 flows in the first outer circumferential direction to cool the body 10 and then is discharged through the refrigerant outlet H2.

The second channel 22 may be provided from the refrigerant inlet H1 to the refrigerant outlet H2 along a second outer circumferential direction of the body 10 in such a manner that another portion of the refrigerant supplied through the refrigerant inlet H1 flows in the second outer circumferential direction to cool the body 10 and then is discharged through the refrigerant outlet H2.

As illustrated in FIGS. 3 to 6, in the cooling channel 20, to increase a supply speed and a discharge speed of the refrigerant by inducing the refrigerant supplied through the refrigerant inlet H1, toward the refrigerant outlet H2, a first space cross-sectional area of a first part P1 of the first channel 21 located relatively close to the refrigerant inlet H1 may be less than a second space cross-sectional area of a second part P2 of the first channel 21 located relatively far from the refrigerant inlet H1, and a third space cross-sectional area of a third part P3 of the second channel 22 located relatively close to the refrigerant outlet H2 may be less than a fourth space cross-sectional area of a fourth part P4 of the second channel 22 located relatively far from the refrigerant outlet H2.

Here, a space cross-sectional area may refer to a cross-sectional area of a space defined when the first channel 21 or the second channel 22 is cut along a direction perpendicular to the direction of dominant flow of the refrigerant.

As illustrated in FIG. 4, for example, the first channel 21 and the second channel 22 may have point symmetry with respect to a center point P of a virtual line L1 connected between the refrigerant inlet H1 and the refrigerant outlet H2.

Accordingly, the first part P1 and the second part P2 may be provided near the refrigerant inlet H1 and the third part P3 and the fourth part P4 may be provided near the refrigerant outlet H2 to have point symmetry with respect to the center point P.

Therefore, a refrigerant supplied through the refrigerant inlet H1 may experience a minimum resistance to the initial inflow of the refrigerant as the space cross-sectional areas increase along the first part P1 and the second part P2, and may experience a minimum resistance to the outflow of the refrigerant when flowing through the third part P3 and the fourth part P4. Then, the refrigerant may be guided along an inclined surface of an upper surface of the cooling channel 20 by the movement of the piston 100 according to a reference example useful for understanding the present invention, and then may be easily discharged through the refrigerant outlet H2.

Specifically, as illustrated in FIG. 5, for example, the cooling channel 20 may have a ring shape in which a lower surface height Ha is equal at every part, an upper surface height Hc of the first part P1 is greater than an upper surface height Hb above the refrigerant inlet H1, and an upper surface height Hd of the second part P2 is greater than the upper surface height Hc of the first part P1.

More specifically, for example, as illustrated in an enlarged part of FIG. 5, the height of the upper surface of the cooling channel 20 may be continuously changed from above the refrigerant inlet H1 to the first part P1 (or the third part P3), and an instantaneous tilt angle A1 of a tangent to the upper surface may be rapidly increased from above the refrigerant inlet H1 to the first part P1 (or the third part P3).

As illustrated in another enlarged part of FIG. 5, the height of the upper surface of the cooling channel 20 may be continuously changed from the first part P1 to the second part P2, and an instantaneous tilt angle A2 of a tangent to the upper surface may be slowly reduced from the first part P1 to the second part P2.

According to the above-described shape, since an upper surface height varies while a lower surface height is fixed, the height of the cooling channel 20 may be increased near the refrigerant inlet H1 from the refrigerant inlet H1 toward the refrigerant outlet H2, i.e., in the first channel 21, and thus a space cross-sectional area may be gradually increased.

On the contrary, in the second channel 22, the space cross-sectional area may not be changed or even may be reduced near the refrigerant inlet H1. Accordingly, if necessary, a refrigerant supplied through the refrigerant inlet H1 may be induced to the first channel 21 rather than the second channel 22 and may circulate along an arc direction due to inertia. Thus, the refrigerant may be more easily supplied and discharged.

If the difference in space cross-sectional area is excessively small, the refrigerant may not be appropriately induced. Otherwise, if the difference in the space cross-sectional area is excessively large, air bubbles may be generated or severe spatial restrictions may be caused. After repeated tests and simulations, the best results are achieved when the space cross-sectional area of the second part P2 is 1.05 to 1.30 times greater than the space cross-sectional area of the first part P1. For example, the space cross-sectional area may have a narrow upper part and a wide lower part as illustrated in FIG. 5, but the shape thereof may be variously changed.

As illustrated in FIGS. 3 to 6, for example, the first channel 21 and the second channel 22 may have an equal channel width CW, and extensions E having an extended width EW or an extended length greater than the channel width CW may be provided under the refrigerant inlet H1 and the refrigerant outlet H2.

Accordingly, the extensions E may have an inverted funnel shape to allow a high-pressure refrigerant sprayed from an oil spray nozzle (not shown), to be easily supplied into the cooling channel 20.

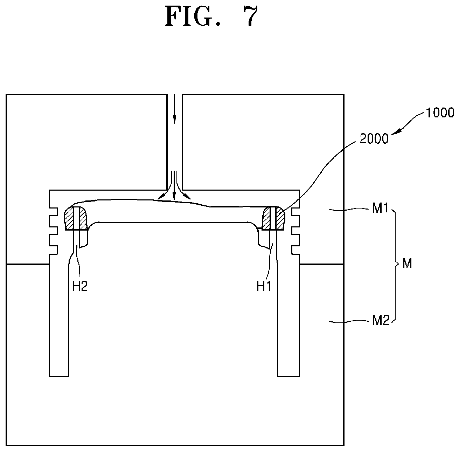

FIG. 7 is a cross-sectional view showing that the cooling channel core 1000 of FIG. 3 is inserted into a casting mold M.

As illustrated in FIGS. 3 to 7, the cooling channel core 1000 according to a reference example useful for understanding the present invention is a medium used to generate the above-described cooling channel 20 of the piston 100, and may include a core body 2000, a first part's counterpart P10, a second part's counterpart P20, a third part's counterpart P30, and a fourth part's counterpart P40.

As illustrated in FIGS. 3 to 7, for example, the core body 2000 may have a shape corresponding to the above-described cooling channel 20, and may be a structure which is insert-casted in the casting mold M including a first mold M1 and a second mold M2 capable of being open and closed in a piston casting operation and then is easily broken and discharged using water, a sulfuric acid solution, or strong impact to generate the cooling channel 20.

As illustrated in FIGS. 3 to 7, the core body 2000 may have a ring shape including a refrigerant inlet's counterpart provided at a side thereof, a refrigerant outlet's counterpart provided at another side thereof, a first channel's counterpart 2100 provided from the refrigerant inlet's counterpart to the refrigerant outlet's counterpart along the first outer circumferential direction, and a second channel's counterpart 2200 provided from the refrigerant inlet's counterpart to the refrigerant outlet's counterpart along the second outer circumferential direction.

The first part's counterpart P10 may be provided in the first channel's counterpart 2100 of the core body 2000, may be located relatively close to the refrigerant inlet's counterpart, and may have a first cross-sectional area.

The second part's counterpart P20 may be provided in the first channel's counterpart 2100 of the core body 2000, may be located relatively far from the refrigerant inlet's counterpart, and may have a second cross-sectional area greater than the first cross-sectional area.

The third part's counterpart P30 may be provided in the second channel's counterpart 2200 of the core body 2000, may be located relatively close to the refrigerant outlet's counterpart, and may have a third cross-sectional area.

The fourth part's counterpart P40 may be provided in the second channel's counterpart 2200 of the core body 2000, may be located relatively far from the refrigerant outlet's counterpart, and may have a fourth cross-sectional area greater than the third cross-sectional area.

Specifically, for a reference example, as illustrated in FIG. 5, the first part's counterpart P10 and the second part's counterpart P20 may have an equal lower surface height Ha, an upper surface height Hc of the first part's counterpart P10 may be greater than an upper surface height Hb above the refrigerant inlet's counterpart, and an upper surface height Hd of the second part's counterpart P20 may be greater than the upper surface height Hc of the first part's counterpart P10.

As illustrated in FIG. 6, the first channel's counterpart 2100 and the second channel's counterpart 2200 may have point symmetry with respect to a center point P of a virtual line L1 connected between the refrigerant inlet's counterpart and the refrigerant outlet's counterpart.

As illustrated in FIGS. 3 to 6, the cooling channel 20 of the piston 100, according to reference examples useful for understanding the present invention may have a shape, form, and size corresponding to those of the cooling channel core 1000 for generating the cooling channel 20, and the above descriptions of the shape, form, and size of the cooling channel 20 may be equally applied to the cooling channel core 1000.

Accordingly, as illustrated in FIG. 7, for example, the cooling channel core 1000 may be insert-casted in a cavity space of the casting mold M including the first mold M1 and the second mold M2 capable of being open and closed in a piston casting operation, may be supported by pillars used to generate the refrigerant inlet H1 and the refrigerant outlet H2, and then may be easily broken and discharged using water, a sulfuric acid solution, or strong impact to generate the cooling channel 20.

To guarantee durability against high temperature and high pressure of molten metal in the piston casting operation and to be easily discharged after the piston casting operation, the core body 2000 may be a ceramic-based or salt-based core body.

Therefore, cooling efficiency and flow of the refrigerant may be improved by inducing engine oil to flow from the refrigerant inlet H1 to the refrigerant outlet H2 in the cooling channel 20 of the piston 100.

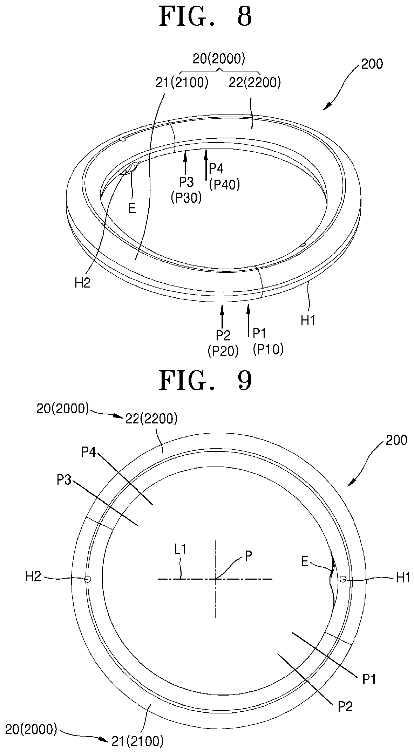

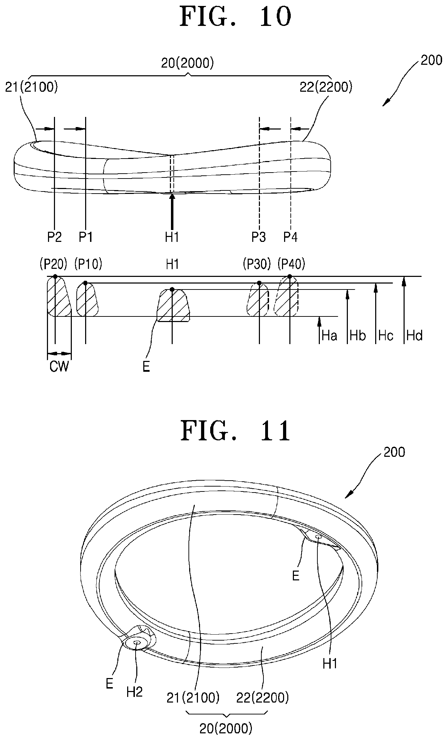

FIG. 8 is a perspective view showing a reference example useful for understanding the present invention of a cooling channel 20 or a cooling channel core 1000 of a piston 200 for an internal combustion engine, FIG. 9 is a plan view of FIG. 8, FIG. 10 is a side view of FIG. 8, and FIG. 11 is a bottom perspective view of FIG. 8.

As illustrated in FIGS. 8 to 11, a refrigerant inlet H1 and a refrigerant outlet H2 may not always be provided at parts having the lowest upper surface height, and may be provided at parts other than the parts having the lowest upper surface height.

As illustrated in FIG. 9, even in this case, for example, a first channel 21 and a second channel 22 may have point symmetry with respect to a center point P of a virtual line L1 connected between the refrigerant inlet H1 and the refrigerant outlet H2.

Accordingly, if necessary, a refrigerant supplied through the refrigerant inlet H1 may be induced to the first channel 21 rather than the second channel 22 and may circulate along an arc direction due to inertia. Thus, the refrigerant may be more easily supplied and discharged.

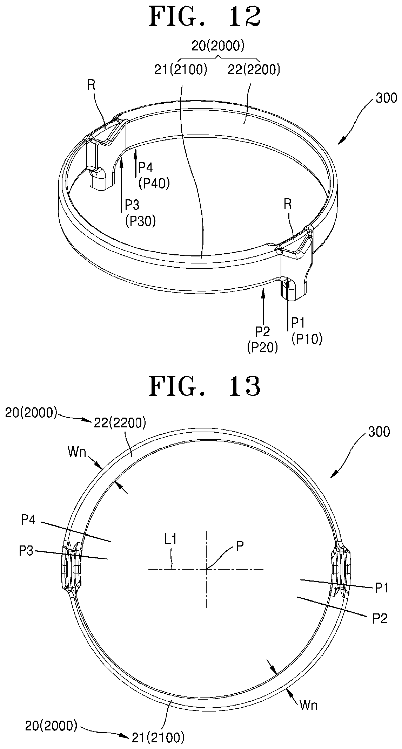

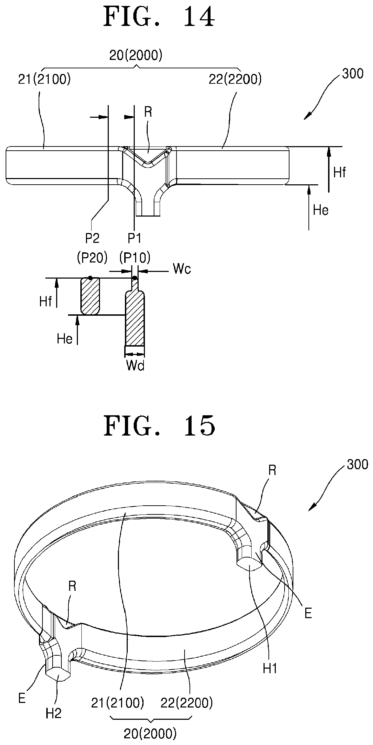

FIG. 12 is a perspective view showing an example of a cooling channel 20 or a cooling channel core 1000 of a piston 300 for an internal combustion engine, according to another embodiment of the present invention, FIG. 13 is a plan view of FIG. 12, FIG. 14 is a side view of FIG. 12, and FIG. 15 is a bottom perspective view of FIG. 12.

As illustrated in FIG. 14, the cooling channel 20 of the piston 300 according to another embodiment of the present invention may have a shape in which an upper surface height Hf is equal and a lower surface height He is also equal at every part. Furthermore, as illustrated in FIGS. 12 and 13, a width of a space cross-section of a second part P2 is greater than a width of a space cross-section of a first part P1.

Here, a first channel 21 may have a space cross-sectional area gradually increased from a refrigerant outlet H2 to a refrigerant inlet H1, and a second channel 22 may have a space cross-sectional area gradually increased from the refrigerant inlet H1 to the refrigerant outlet H2.

Accordingly, if necessary, a refrigerant supplied through the refrigerant inlet H1 may be induced to the first channel 21 rather than the second channel 22 and may circulate along an arc direction due to inertia. Thus, the refrigerant may be more easily supplied and discharged.

As illustrated in FIGS. 12 to 15, the cooling channel core 1000 according to another embodiment of the present invention may have a shape in which a first part's counterpart P10 and a second part's counterpart P20 have an equal upper surface height Hf and an equal lower surface height He, and a width Wd of a cross-section of the second part's counterpart P20 is greater than a width Wc of a cross-section of the first part's counterpart P10.

That is, a first channel's counterpart 2100 may have a width Wn and a space cross-sectional area gradually increased from a refrigerant outlet's counterpart to a refrigerant inlet's counterpart, and a second channel's counterpart 2200 may have a width Wn and a space cross-sectional area gradually increased from the refrigerant inlet's counterpart to the refrigerant outlet's counterpart.

As illustrated in FIGS. 12 to 15, ribs R may be provided on the first part's counterpart P10 and the second part's counterpart P20.

The first channel's counterpart 2100 and the second channel's counterpart 2200 may have an equal channel width CW, and extensions E having an extended length may be provided under the refrigerant inlet's counterpart and the refrigerant outlet's counterpart.

Therefore, a refrigerant may be supplied through the refrigerant inlet H1 with the minimum resistance of flow due to increasing space cross-sectional areas, may be induced along a slope of an outer circumferential surface of the cooling channel 20 due to motion of the piston 300 according to another embodiment of the present invention, and then may be easily discharged through the refrigerant outlet H2.

In addition, the refrigerant may sufficiently reach upper parts of the refrigerant inlet H1 and the refrigerant outlet H2 due to the ribs R and thus cooling efficiency of the refrigerant inlet's counterpart and the refrigerant outlet's counterpart may be improved.

As described above, according to an embodiment of the present invention, a piston for an internal combustion engine, and a cooling channel core, the piston and the cooling channel core capable of improving piston cooling performance by inducing engine oil to flow from an refrigerant inlet to a refrigerant outlet in a cooling channel of the piston. However, the scope of the present invention is not limited to the above effect.

While the present invention has been particularly shown and described with reference to embodiments thereof, it will be understood by those of ordinary skill in the art that various changes in form and details may be made therein without departing from the scope of the present invention as defined by the following claims.

## Claims

1. A piston (300) for an internal combustion engine, the piston (300) comprising:
a body (10) comprising a piston pin boss (11) for inserting a piston pin thereinto, and a skirt (12) corresponding to a cylinder wall; and
a cooling channel (20) provided in the body (10) to allow a refrigerant for cooling the body (10), to flow therethrough, and having a ring shape comprising a first channel (21) provided from a refrigerant inlet (H1) to a refrigerant outlet (H2) along a first outer circumferential direction of the body (10), and a second channel (22) provided from the refrigerant inlet (H1) to the refrigerant outlet (H2) along a second outer circumferential direction of the body (10),
wherein, in the cooling channel (20), to increase a supply speed and a discharge speed of the refrigerant by inducing the refrigerant supplied through the refrigerant inlet (H1), toward the refrigerant outlet (H2), a first space cross-sectional area of a first part of the first channel (21) is less than a second space cross-sectional area of a second part of the first channel (21)
**characterised in that** the first channel (21) has a space cross-sectional area gradually increased from the refrigerant outlet (H2) to the refrigerant inlet (H1), and
the second channel (22) has a space cross-sectional area gradually increased from the refrigerant inlet (H1) to the refrigerant outlet (H2).

2. The piston (300) of claim 1, wherein the cooling channel (20) has a shape in which an upper surface height (Hf) is equal and a lower surface height (He) is also equal at every part, and a width (Wn) of a space cross-section of the second part is greater than a width (Wn) of a space cross-section of the first part.

3. The piston (300) of claim 1, wherein the first channel (21) and the second channel (22) have an equal channel width, and
wherein extensions (E) having an extended width or an extended length greater than the channel width are provided under the refrigerant inlet (H1) and the refrigerant outlet (H2).

4. A cooling channel core (1000) comprising:
a core body (2000) inserted into a casting mold (M) in a piston casting operation to generate a cooling channel (20), and having a ring shape comprising a refrigerant inlet's counterpart provided at a side thereof, a refrigerant outlet's counterpart provided at another side thereof, a first channel's counterpart (2100) provided from the refrigerant inlet's counterpart to the refrigerant outlet's counterpart along a first outer circumferential direction, and a second channel's counterpart (2200) provided from the refrigerant inlet's counterpart to the refrigerant outlet's counterpart along a second outer circumferential direction;
a first part's counterpart provided in the first channel's counterpart (2100) of the core body (2000), and having a first cross-sectional area;
a second part's counterpart provided in the first channel's (2100) counterpart of the core body (2000), and having a second cross-sectional area greater than the first cross-sectional area;
**characterised in that** the first channel's counterpart (2100) has a space cross-sectional area gradually increased from the refrigerant outlet's counterpart to the refrigerant inlet's counterpart, and
the second channel's counterpart (2200) has a space cross-sectional area gradually increased from the refrigerant inlet's counterpart to the refrigerant outlet's counterpart.

5. The cooling channel core (1000) of claim 4, wherein the cooling channel core (2000) has a shape in which the first part's counterpart and the second part's counterpart have an equal upper surface height (Hf) and an equal lower surface height (He), and a width (Wn) of a cross-section of the second part's counterpart is greater than a width (Wn) of a cross-section of the first part's counterpart.

6. The cooling channel core (1000) of claim 4, wherein the first channel's counterpart (2100) and the second channel's counterpart (2200) have an equal channel width, and
wherein extensions (E) having an extended width or an extended length greater than the channel width are provided under the refrigerant inlet's counterpart and the refrigerant outlet's counterpart.

7. The cooling channel core (1000) of claim 4, wherein the core body (2000) is a ceramic-based or salt-based core body.

## Patentansprüche

1. Kolben (300) für einen Verbrennungsmotor, wobei der Kolben (300) Folgendes umfasst:
einen Körper (10), welcher einen Kolbenbolzenvorsprung (11) zum Einführen eines Kolbenbolzens dadurch und einen Mantel (12) umfasst, welcher einer Zylinderwand entspricht; und
einen Kühlkanal (20), welcher in dem Körper (10) bereitgestellt ist, um zu veranlassen, dass ein Kühlmittel zum Kühlen des Körpers (10) durch denselben fließt, und eine Ringform aufweist, welche einen ersten Kanal (21), welcher von einem Kühlmitteleingang (H1) zu einem Kühlmittelausgang (H2) entlang einer ersten äußeren Umfangsrichtung des Körpers (10) bereitgestellt ist, und einen zweiten Kanal (22) umfasst, welcher von dem Kühlmitteleingang (H1) zu dem Kühlmittelausgang (H2) entlang einer zweiten äußeren Umfangsrichtung des Körpers (10) bereitgestellt ist,
wobei, in dem Kühlkanal (20), um eine Versorgungsrate und eine Ausgaberate des Kühlmittels zu erhöhen, indem das durch den Kühlmitteleingang zugeführte Kühlmittel zu dem Kühlmittelausgang (H2) induziert wird, eine erste Raumquerschnittsfläche eines ersten Teils des ersten Kanals (21) kleiner als eine zweite Raumquerschnittsfläche eines zweiten Teils des ersten Kanals (21) ist,
**dadurch gekennzeichnet, dass** der erste Kanal (21) eine Raumquerschnittsfläche aufweist, welche von dem Kühlmittelausgang (H2) zu dem Kühlmitteleingang (H1) allmählich steigt, und
der zweite Kanal (22) eine Raumquerschnittsfläche aufweist, welche von dem Kühlmitteleingang (H1) zu dem Kühlmittelausgang (H2) allmählich steigt.

2. Kolben (300) nach Anspruch 1, wobei der Kühlkanal (20) eine Form aufweist, in welcher eine obere Flächenhöhe (Hf) in jedem Teil gleich ist und eine untere Flächenhöhe (He) auch in jedem Teil gleich ist, und eine Breite (Wn) eines Raumquerschnitts des zweiten Teils größer als eine Breite (Wn) eines Raumquerschnitts des ersten Teils ist.

3. Kolben (300) nach Anspruch 1, wobei der erste Kanal (21) und der zweite Kanal (22) die gleiche Kanalbreite aufweisen, und
wobei Verlängerungen (E), welche eine erweiterte Breite oder eine erweiterte Länge aufweisen, welche größer als die Kanalbreite ist, unterhalb des Kühlmitteleingangs (H1) und des Kühlmittelausgangs (H2) bereitgestellt sind.

4. Kühlkanalkern (1000), umfassend:
einen Kernkörper (2000), welcher in eine Gießform (M) in einem Kolbengießverfahren eingeführt wird, um einen Kühlkanal (20) zu erzeugen, und welcher eine Ringform aufweist, welche ein Kühlmitteleinganggegenstück, welches auf einer Seite derselben bereitgestellt ist, und ein Kühlmittelausganggegenstück umfasst, welches auf einer anderen Seite derselben bereitgestellt ist, wobei ein erstes Kanalgegenstück (2100) von dem Kühlmitteleinganggegenstück zu dem Kühlmittelausganggegenstück entlang einer ersten äußeren Umfangsrichtung bereitgestellt ist, und wobei ein zweites Kanalgegenstück (2200) von dem Kühlmitteleinganggegenstück zu dem Kühlmittelausganggegenstück entlang einer zweiten äußeren Umfangsrichtung bereitgestellt ist;
ein Gegenstück des ersten Teils, welches in dem ersten Kanalgegenstück (2100) des Kernkörpers (2000) bereitgestellt ist, und welches eine erste Querschnittsfläche aufweist;
ein Gegenstück des zweiten Teils, welches in dem ersten Kanalgegenstück (2100) des Kernkörpers (2000) bereitgestellt ist, und eine zweite Querschnittsfläche aufweist, welche größer als die erste Querschnittsfläche ist;
**dadurch gekennzeichnet, dass** das erste Kanalgegenstück (2100) eine Raumquerschnittsfläche aufweist, welche allmählich von dem Gegenstück des Kühlmittelausganggegenstücks zu dem Kühlmitteleinganggegenstück steigt, und
das zweite Kanalgegenstück (2200) eine Raumquerschnittsfläche aufweist, welche allmählich von dem Kühlmitteleinganggegenstück zu dem Kühlmittelausganggegenstück steigt.

5. Kühlkanalkern (1000) nach Anspruch 4, wobei der Kühlkanalkern (2000) eine Form aufweist, in welcher das Gegenstück des ersten Teils und das Gegenstück des zweiten Teils die gleiche obere Flächenhöhe (Hf) und die gleiche untere Flächenhöhe (He) aufweisen und wobei eine Breite (Wn) eines Querschnitts des Gegenstücks des zweiten Teils größer als eine Breite (Wn) eines Querschnitts des Gegenstücks des ersten Teils ist.

6. Kühlkanalkern (1000) nach Anspruch 4, wobei das erste Kanalgegenstück (2100) und das zweite Kanalgegenstück (2200) dieselbe Kanalbreite aufweisen, und
wobei Verlängerungen (E), welche eine erweiterte Breite oder eine erweiterte Länge aufweisen, welche größer als die Kanalbreite ist, unterhalb des Gegenstücks des Kühlmitteleingangs und des Gegenstücks des Kühlmittelausgangs bereitgestellt sind.

7. Kühlkanalkern (1000) nach Anspruch 4, wobei der Kernkörper (2000) ein keramikbasierter oder ein salzbasierter Kernkörper ist.

## Revendications

1. Piston (300) pour un moteur à combustion interne, le piston (300) comprenant :
un corps (10) comprenant un bossage d'axe de piston (11) pour y insérer un axe de piston, et une jupe (12) correspondant à une paroi de cylindre, et
un canal de refroidissement (20) agencé dans le corps (10) pour permettre à un réfrigérant destiné à refroidir le corps (10) de s'écouler à travers celui-ci, et ayant une forme annulaire comprenant un premier canal (21) agencé à partir d'une entrée du réfrigérant (H1) jusqu'à une sortie du réfrigérant (H2) le long d'une première direction circonférentielle extérieure du corps (10), et un deuxième canal (22) agencé depuis l'entrée du réfrigérant (H1) jusqu'à la sortie du réfrigérant (H2) le long d'une seconde direction circonférentielle extérieure du corps (10),
dans lequel, dans le canal de refroidissement (20), afin d'augmenter une vitesse d'alimentation et une vitesse d'évacuation du réfrigérant en entraînant le réfrigérant alimenté à travers l'entrée du réfrigérant (H1) vers la sortie du réfrigérant (H2), une première superficie de section transversale d'espace d'une première partie du premier canal (21) est inférieure à une deuxième superficie de section transversale d'espace d'une deuxième partie du premier canal (21),
**caractérisé en ce que** le premier canal (21) a une superficie de section transversale d'espace qui augmente progressivement de la sortie de réfrigérant (H2) jusqu'à l'entrée de réfrigérant (H1), et
le deuxième canal (22) a une superficie de section transversale d'espace qui augmente progressivement de l'entrée de réfrigérant (H1) jusqu'à la sortie de réfrigérant (H2).

2. Piston (300) selon la revendication 1, dans lequel le canal de refroidissement (20) a une forme dans laquelle une hauteur d'une surface supérieure (Hf) est égale et une hauteur d'une surface inférieure (He) est aussi égale sur chaque partie, et une largeur (Wn) d'une section transversale d'espace de la deuxième partie est supérieure à une largeur (Wn) d'une section transversale d'espace de la première partie.

3. Piston (300) selon la revendication 1, dans lequel le premier canal (21) et le deuxième canal (22) ont une largeur de canal égale, et
dans lequel des extensions (E) ayant une largeur étendue ou une longueur étendue supérieure à la largeur du canal sont agencées au-dessous de l'entrée du réfrigérant (H1) et de la sortie du réfrigérant (H2).

4. Noyau de canal de refroidissement (1000) comprenant :
un corps de noyau (2000) inséré dans un moule de coulée (M) au cours d'une opération de coulée d'un piston pour produire un canal de refroidissement (20), et ayant une forme annulaire comprenant une contre-pièce de l'entrée du réfrigérant agencée au niveau d'un de ses côtés, une contre-pièce de la sortie du réfrigérant agencée au niveau d'un autre de ses côtés, une contre-pièce de premier canal (2100) disposée à partir de la contre-pièce de l'entrée du réfrigérant jusqu'à la contre-pièce de la sortie du réfrigérant le long d'une première direction circonférentielle extérieure, et une contre-pièce de deuxième canal (2200) disposée à partir de la contre-pièce de l'entrée du réfrigérant jusqu'à la contre-pièce de la sortie du réfrigérant le long d'une deuxième direction circonférentielle extérieure,
une contre-pièce de première partie agencée dans la contre-pièce de premier canal (2100) du corps du noyau (2000), et ayant une première superficie de section transversale, une contre-pièce de deuxième partie agencée dans la contre-pièce de premier canal (2100) du corps du noyau (2200), et ayant une seconde superficie de section transversale supérieure à la première superficie de section transversale,
**caractérisé en ce que** la contre-pièce de premier canal (2100) a une superficie de section transversale d'espace qui augmente progressivement de la contre-pièce de sortie du réfrigérant jusqu'à la contre-pièce d'entrée du réfrigérant, et
la contre-pièce de second canal (2200) a une superficie de section transversale d'espace qui augmente progressivement de la contre-pièce d'entrée du réfrigérant jusqu'à la contre-pièce de sortie du réfrigérant.

5. Noyau de canal de refroidissement (1000) selon la revendication 4, dans lequel le noyau du canal de refroidissement (2000) a une forme dans laquelle la contre-pièce de la première partie et la contre-pièce de la deuxième partie ont une hauteur de surface supérieure (Hf) égale et une hauteur de surface inférieure (He) égale, et une largeur (Wn) d'une section transversale de la contre-pièce de la deuxième partie est supérieure à une largeur (Wn) d'une section transversale de la contre-pièce de la première partie.

6. Noyau de canal de refroidissement (1000) selon la revendication 4, dans lequel la contre-pièce de premier canal (2100) et la contre-pièce du deuxième canal (2200) ont une largeur de canal égale, et
dans lequel des extensions (E) ayant une largeur étendue ou une longueur étendue supérieure à la largeur du canal sont agencées au-dessous de la contre-pièce de l'entrée du réfrigérant et de la contre-pièce de la sortie du réfrigérant.

7. Noyau de canal de refroidissement (1000) selon la revendication 4, dans lequel le corps du noyau (2000) est un corps de noyau à base de céramique ou à base d'un sel.
